# EUROPÄISCHE PATENTSCHRIFT

(11) **EP 0 729 775 B1**
(45) Veröffentlichungstag und Bekanntmachung des Hinweises auf die Patenterteilung: **03.05.2000**
(21) Anmeldenummer: 96101567.4
(22) Anmeldetag: 03.02.1996
(51) Int. Cl.: B01D 35/147, F01M 1/10

(54) **Filter mit einem ersten und zweiten in Reihe geschalteten Filtermedium**
Filter with first and second serially connected filter media
Filtre avec premier et deuxième médium de filtre disposés en série

(30) Priorität: 01.03.1995 DE 19507135
(43) Veröffentlichungstag der Anmeldung: 04.09.1996
(73) Patentinhaber: MAHLE Filtersysteme GmbH, 70376 Stuttgart (DE)
(72) Erfinder: Wente, Heinrich, D-71364 Winnenden (DE)
(74) Vertreter: Patentanwalts-Partnerschaft Rotermund + Pfusch

(56) Entgegenhaltungen:
- DE-A- 1 461 431
- DE-U- 8 437 507
- US-A- 3 283 904

## Beschreibung

Die Erfindung betrifft ein Filter mit einem ersten und zweiten in Reihe geschalteten Filtermedium.

Es gibt in der Praxis Anwendungsfälle, in denen zu Beginn eines Filtrationsprozesses ein höherer Abscheidegrad erreicht werden soll als während der Restzeit der Lebensdauer des Filters. Ein solcher Anwendungsfall liegt beispielsweise bei Schmierölfiltern von Verbrennungsmotoren vor. Hier ist während einer befristeten Einlaufphase des Motors eine feinere Filtration erwünscht als während der darauf folgenden Motorlaufzeit. Für die Einlaufphase eines Motors ist daher bisher ein Spezialfilter eingesetzt worden, das nach relativ kurzer Betriebszeit durch ein normales Motorbetriebsfilter mit einem geringeren Abscheidegrad ersetzt wurde.

Hier eine rationellere Lösung zu finden, ist das Problem, mit dem sich die Erfindung beschäftigt.

Eine Lösung zeigt eine Filterausführung nach den kennzeichnenden Merkmalen des Patentanspruchs 1 auf.

Diese Lösung beruht auf dem Gedanken, ein gemeinsames Filter mit Doppelfunktion für die Einlaufphase und die normale Betriebsdauer einzusetzen, das seine Funktion nach Beendigung der Einlaufphase automatisch auf ein normales Betriebsfilter umstellt. Erreicht wird dies ganz einfach dadurch, daß ein Umschaltventil eingebaut ist, daß das zu filternde Medium bei zu hohem Druckverlust innerhalb des Feinfilters an diesem vorbei direkt auf das weniger feine Betriebsfiltermedium führt.

Zweckmäßige Ausgestaltungen für die Anordnung des Umgehungsventiles sind Gegenstand der Ansprüche 3 und 4.

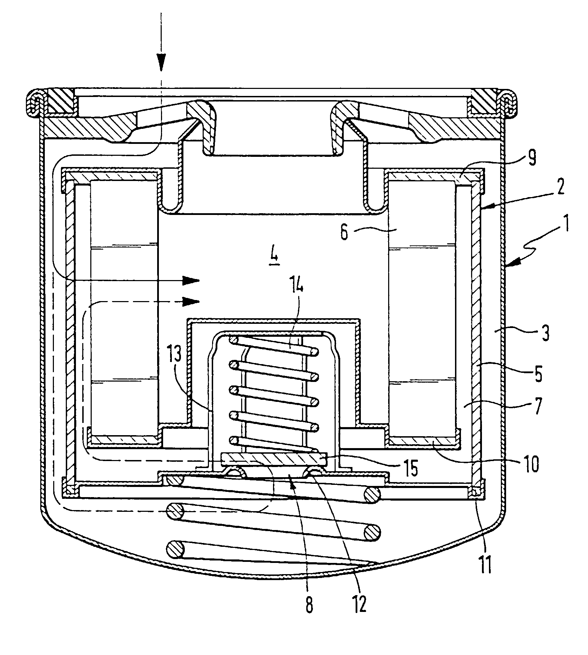

Ein Ausführungsbeispiel ist in der Zeichnung dargestellt.

Diese zeigt
ein Anschraub-Wechselfilter für den Schmierölkreislauf eines Verbrennungsmotors halb im Längsschnitt und halb in Ansicht.

In einem topfförmig geschlossenen Anschraubgehäuse 1 trennt ein Doppelfilter 2 einen Rohraum 3 von einem Reinraum 4.

Das durch das Doppelfilter 2 strömende und zu filternde Medium ist Schmieröl eines Verbrennungsmotors.

Das Doppelfilter besteht aus einer ersten Stufe mit einem feinen Filtermedium 5 und einer zweiten Stufe aus einem weniger feinen zweiten Filtermedium 6. Zwischen dem ersten Filtermedium 5 und dem zweiten Filtermedium 6 liegt ein Zwischenraum 7, der durch ein Überströmventil 8 von dem Rohraum 3 getrennt bzw. in geöffnetem Zustand des Ventiles 8 mit diesem Rohraum 3 verbunden ist.

Das Doppelfilter 2 besitzt an einem axialen Ende eine gemeinsame Endscheibe 9. An dem anderen Ende sind die beiden Filtermedien 5, 6 verschieden lang und durch getrennte Endscheiben 10 und 11 stirnseitig gedichtet. Dabei deckt die Endscheibe 10 das zweite Filtermedium 6 und die Endscheibe 11 das erste Filtermedium 5 ab. Die Endscheibe 11 des ersten Filtermediums erstreckt sich nach radial innen über den gleichen Bereich wie die Endscheibe 10 des zweiten Filtermediums 6. Der Zwischenraum 7 zwischen den beiden Filtermedien 5 und 6 erfaßt auch den Bereich zwischen den beiden Endscheiben 10 und 11. In dem radialen Innenbereich der beiden Endscheiben 10 und 11 befindet sich das den Zwischenraum 7 mit dem Rohraum 3 verbindende Überströmventil 8. Um Raum für die Unterbringung des Überströmventiles 8 zu haben, ist die Endscheibe 10 topfförmig in ihrem Zentrum in den Reinraum 4 des Filters hineingezogen, wobei die Endscheibe 10 zusammen mit ihrem topfförmig eingezogenen Bereich geschlossen ist.

Das Überströmventil 8 ist in die Endscheibe 11 integriert. Zu diesem Zweck ist die Endscheibe 11 radial innen mit einem als Ventilsitz dienenden Kragen 12 versehen.

An diesen Kragen 12 ist ein zumindest in Teilbereichen gitterförmig ausgebildeter Korb 13 fest angebunden, der in den topfförmigen Einzug der Endscheibe 10 hineinragt. In diesen Korb 13 stützt sich eine Schraubenfeder 14 ab, die eine Ventilplatte 15 zur dichten Anlage an den Kragen 12 beaufschlagt. Bei geschlossenem Überströmventil 8 werden beide Filtermedien 5 und 6 hintereinander durchströmt. Bei zu hohem Druckverlust in dem ersten Filtermedium 5 öffnet unter dem sich dann in dem Rohraum einstellenden oberhalb eines vorbestimmten Wertes gegebenen Druck das Überströmventil 8, wodurch das zu filternde Medium das erste Filtermedium 5 umströmend nur noch das zweite Filtermedium 6 durchströmt.

In der Zeichnung geben die Pfeile mit durchgezogenen Linien den Strömungsweg durch beide Filtermedien und die Pfeile mit gestrichelten Linien eine das erste Filtermedium 5 umgehende Strömung an.

## Patentansprüche

1. Filter mit einem ersten und zweiten in Reihe geschalteten Filtermedium,
**dadurch gekennzeichnet,**
daß das erste Filtermedium gegenüber dem zweiten Filtermedium einen höheren Abscheidegrad besitzt und daß zwischen dem stromauf des ersten Filtermediums (5) liegenden Rohraum (3) und dem stromauf des zweiten Filtermediums (6) liegenden Raum (7) ein Umgehungsventil (8) angeordnet ist, das nach Überschreiten eines Druckverlustes innerhalb des ersten Filtermediums (5) geöffnet ist.

2. Filter nach Anspruch 1 als Schmierölfilter für Verbrennungsmotoren,
**dadurch gekennzeichnet,**
daß das erste Filtermedium (5) für eine Funktion als Einfahrfilter und das zweite Filtermedium (6) für eine Funktion als Dauerfilter ausgelegt ist.

3. Filter nach Anspruch 1 oder 2,
**dadurch gekennzeichnet,**
daß die beiden Filtermedien (5, 6) in der Form koaxial ineinander angeordneter Ringfilter vorliegen mit einer gemeinsamen Endscheibe (9) an einem axialen Ende, getrennten, axial voneinander beabstandeten, Endscheiben (10, 11) an dem anderen Ende, einer axial zwischen den beiden getrennten Endscheiben (10, 11) liegenden Verbindung des Rohraumes (3) mit dem zwischen den beiden Filtermedien (5, 6) liegenden Raum (7) und einem diese Verbindung steuernden Überströmventil (8).

4. Filter nach Anspruch 3,
**dadurch gekennzeichnet,**
daß bei den getrennten Endscheiben (10, 11) diejenige des zweiten Filtermediums (6) topfförmig nach innen geschlossen ausgebildet ist und daß eine an der Endscheibe (11) gelagerte Schraubenfeder (14) eine Ventilplatte (15) axial dicht an den Kragen (13) an dem Rand einer zentralen Öffnung dieser Endscheibe (11) drückt und damit das Überströmventil (8) darstellt.

## Claims

1. Filter with a first and second filter medium connected in series, characterised in that the first filter medium has a higher degree of separation than the second filter medium and in that a bypass valve (8) which is opened after a pressure drop within the first filter medium (5) has been exceeded is arranged between the crude chamber (3) located upstream of the first filter medium (5) and the chamber (7) located upstream of the second filter medium (6).

2. Filter according to claim 1 as lubricating oil filter for internal-combustion engines, characterised in that the first filter medium (5) is designed for a role as run-in filter and the second filter medium (6) for a role as permanent filter.

3. Filter according to claim 1 or 2, characterised in that the two filter media (5, 6) are in the form of annular filters arranged coaxially in one another with a common end plate (9) at one axial end, separated, axially mutually spaced end plates (10, 11) at the other end, a connection, located axially between the two separated end plates (10, 11), of the crude chamber (3) to the chamber (7) located between the two filter media (5, 6) and an overflow valve (8) controlling this connection.

4. Filter according to claim 3, characterised in that, with the separated end plates (10, 11), that of the second filter medium (6) is closed internally in the form of a pot and in that a helical spring (14) mounted on the end plate (11) presses a valve plate (15) axially tightly against the collar (13) on the edge of a central orifice of this end plate (11) and therefore forms the overflow valve (8).

## Revendications

1. Filtre comportant un premier et un deuxième milieu filtrant disposés en série, caractérisé par le fait que le premier milieu filtrant a un plus haut degré de séparation que le deuxième milieu filtrant, et qu'entre l'espace brut (3), situé en amont du premier milieu filtrant (3), et l'espace (7) situé en amont du deuxième milieu filtrant (6) est placée une soupape de dérivation (8) qui est ouverte en cas de dépassement d'une perte de charge dans le premier milieu filtrant (5).

2. Filtre selon la revendication 1 servant de filtre d'huile lubrifiante pour moteurs à combustion interne, caractérisé par le fait que le premier milieu filtrant (5) est conçu pour fonctionner en filtre de rodage et le deuxième milieu filtrant (6) conçu pour fonctionner en filtre permanent.

3. Filtre selon l'une des revendications 1 et 2, caractérisé par le fait que les deux milieux filtrants (5, 6) se présentent sous la forme de filtres annulaires placés coaxialement l'un dans l'autre avec un disque d'extrémité commun (9) à une extrémité axiale, des disques d'extrémité séparés espacés axialement (10, 11) à l'autre extrémité, une communication de l'espace brut (3) avec l'espace (7) situé entre les deux milieux filtrants (5, 6) située entre les deux disques d'extrémité séparés (10, 11), et une soupape de dérivation (8) qui commande cette communication.

4. Filtre selon la revendication 3, caractérisé par le fait que celui des disques d'extrémité séparés (10, 11) qui est le disque du deuxième milieu filtrant (6) est fermé vers l'intérieur en forme de pot et qu'un ressort hélicoïdal (14) monté sur ce disque d'extrémité (11) serre un plateau de soupape (15) axialement de manière étanche contre le collet (13) prévu sur le bord d'une ouverture centrale de ce disque (11), et constitue ainsi la soupape de dérivation.
